# EUROPEAN PATENT APPLICATION

(11) **EP 1 072 831 A2**
(43) Date of publication of application: **31.01.2001**
(21) Application number: 00115896.3
(22) Date of filing: 25.07.2000
(51) Int. Cl.: F16K 27/00, F16K 11/07, F15B 13/08

(54) **Air-operated valve module**

(30) Priority: 27.07.1999 IT MI991662
(71) Applicant: Migliori, Luciano, 20090 Milano 2, Segrate (MI) (IT)
(72) Inventor: Migliori, Luciano, 20090 Milano 2, Segrate (MI) (IT)
(74) Representative: Coloberti, Luigi

(57) **Abstract**

An air-operated valve module; the valve module comprises a body (13) having a longitudinal axis and a flow path having air inlet/outlet ports (24, 25) for connection to a user; a spool (14) is reciprocable axially to allow circulation of pressurised air between air supply and air discharge ducts (21, 22, 23) and the air ports (24, 25) connected to a user. Large air supply and air discharge ducts (21, 22, 23) extend crosswidth the valve body between flat front and rear surfaces which extend parallel to the longitudinal axis of the valve body (13). A baffle (34) for deviating the air flow is provided at the front and the rear side of each air supply and air discharge duct (21, 22, 23), the baffle (34) consisting of an extension of spool guide surface (27, 28, 29) and preventing the air flow from directly striking the spool (14).

## Description

### BACKGROUND OF THE INVENTION

The present invention relates to a pneumatic valve module of the type defined in the preamble of the claim 1 and concerns also a valve assembly provided by sealingly arranging side by side several valve modules of the same type, to obtain a pressurised-air distributor for a number of users, or air feeding points.

Pressurised-air distribution valves of the type comprising a valve body provided with a cylindrical chamber which extends along a longitudinal axis, and a reciprocable spool member for the air flow circulation from and towards a user, are widely in use; the spool member is connected to at least one pneumatic actuator so as to be reciprocated, between two operative positions in which the spool member connects air-flow passages inside the valve body to air feeding and air-discharging ports connected to a user, as well as to air supply and/or air discharge ports connected to a pressurised-air source and to an air-discharge point, respectively.

Two or more valves of this type are usually fastened to a base-plate or air-flow distributor, provided with air supply and air-discharge channels for distribution of the pressurised air to the valves and by means of which it is also possible to secure the valve assembly to a machine tool or to a support structure.

A first problem which arises with valves of this type relates to protection of the spool against the dirt entrained by the pressurised air supplied to the users.

In fact, although the filtering means are suitably used to remove the dirt from the air, it nevertheless entrains minute solid particles or a fine dispersion of oily substances which, striking or coming into contact with the spool, end up adhering to the sealing gaskets until adversely affect the sealing, even to the point of stopping sliding of the spool. Since the valve body is normally closed by covers, in the case side by side arrangement of conventional valves it is not possible to carry out the maintenance of them, unless they are disassembled and opened so as to allow cleaning or removal of the dirty or worn parts, which must be replaced.

A second problem relates to the excessive overall dimensions of the valves, in particular owing to the use of pneumatic cylinders for operating the spools, which must have suitable dimensions for providing the required actuating forces, as well as the use of base-plates for supplying the pressurised-air to valves.

As regards the widthwise dimensions, WO 98/39586 has already proposed to use an actuating cylinder having an oval cross-sectional area which compared to a cylindrical actuator having the same cross-sectional area, allows the widthwise dimensions to be reduced. However, the use of an oval cylinders has been proposed for a particular use and require an extremely complex valve structure consisting of two half-bodies having, on their inner surfaces, recesses or cavities designed to seat the various internal components of the valves, with the connections for supplying and discharging the pressurised air, as well as the connections for the user provided on the narrow faces of said valve body, in an entirely conventional mode.

Therefore, to provide a valve assembly by the use of this type of valve requires again a base-plate or headers which contribute to increase the overall dimensions, resulting in unnecessary complications.

The use of base-plates or external headers also requires particularly complex air-flow paths, resulting in greater pressure losses and a reduction in the rated capacity of the valves.

### OBJECTS OF THE INVENTION

The general object of the present invention is to provide a sliding valve for pressurised air, of the type having an air-operated spool, by which it is possible to reduce or substantially eliminate most of the abovementioned problems.

In particular, the main object of the present invention is to provide a modular valve in which the spool member is suitably protected against the dirt entrained by the air, and in which the same spool and the air passages inside the valve body are made easily accessible from the exterior of the same valve so as to allow the normal checking, overhaul and cleaning operations.

A further object of the present invention is to provide a modular valve, having extremely small dimensions both widthwise and heightwise, and which allows to eliminate the use of normal base-plates, providing at the same time wide air-flow passages for the pressurised air and a substantial reduction of pressure losses.

### BRIEF DESCRIPTION OF THE INVENTION

The above may be achieved by means of an air-operated modular valve provided with a protected spool member and air distribution headers, according to claim 1.

More precisely, according to the invention, a pneumatic valve module has been provided comprising:
a valve body longitudinally extending in an axial direction;
an air-flow path having axially spaced apart seating surfaces parallely extending in the longitudinal direction of the valve body, said flow path including air inlet/air outlet ports opening at one side surface of the valve body for connection to a user;
a spool member inside the flow path, said spool member comprising axially spaced apart plugs, said spool member being reciprocable in respect to said seating surfaces to selectively connect the air inlet/outlet ports and the flow-path to a pressurised air feeding and air discharging ducts; characterized in that the valve body comprises:
front and rear flat side surfaces parallely arranged to the longitudinal axis of the valve body;
said air-feeding and air-discharging ducts transversely extending to the flow-path between said flat side surfaces; and
air-flow deviating means extending on both side of the spool member, between the seating surfaces inside the air-feeding and air-discharging ducts.

Owing to the presence of wide transverse passages defining the compressed-air supply and air discharge ducts, and the use of spool protection baffles inside the valve body, it has been made to reduce the heightwise dimensions of the valve module, preventing at the same time the compressed-air flow and dirt entrained by the same air from immediately coming into direct contact with the spool member and closure plugs; in this way the use of the usual supply base-plates is avoided, reducing the overall dimensions by as much as 25-30%, while maintaining large flow cross-sections for the air and smaller pressure losses since the air flow from the supply and discharge ducts, towards the air feeding/air discharging ports connected to a user, occurs directly through spool guiding and sealing seating inside the same body of the valve.

### BRIEF DESCRIPTION OF THE DRAWINGS

These and further features of a valve module according to the invention, will emerge more clearly from the following description with reference to the accompanying drawings, in which:
Fig. 1 is a perspective view of a valve module according to the invention;
Fig. 2 is a perspective view, on a larger scale, of the valve module of Fig. 1;
Fig. 3 is a perspective cross-sectional view of the valve module of Fig. 2;
Fig. 4 is a longitudinally sectioned view of the valve module according to Fig. 2;
Fig. 5 shows a side view of the valve module according to Fig. 2; and
Fig. 6 is a cross-sectional view, on a larger scale, along the line 6-6 of Fig. 5.

### DETAILED DESCRIPTION OF THE INVENTION

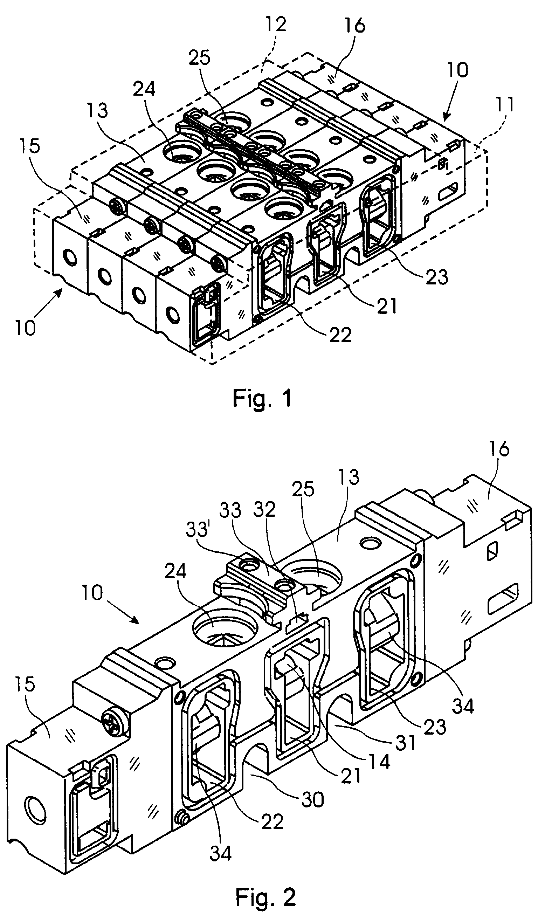

figure 1 shows a valve assembly according to the invention comprising several valve modules 10 which are arranged side by side, so as to form a functional unit in which the individual valve modules 10 are functionally and structurally connected together and to two end closing headers 11 and 12, at least one of which is provided with connections for supplying and discharging the compressed air which must be selectively supplied to various users via the individual valve modules 10 of the valve assembly.

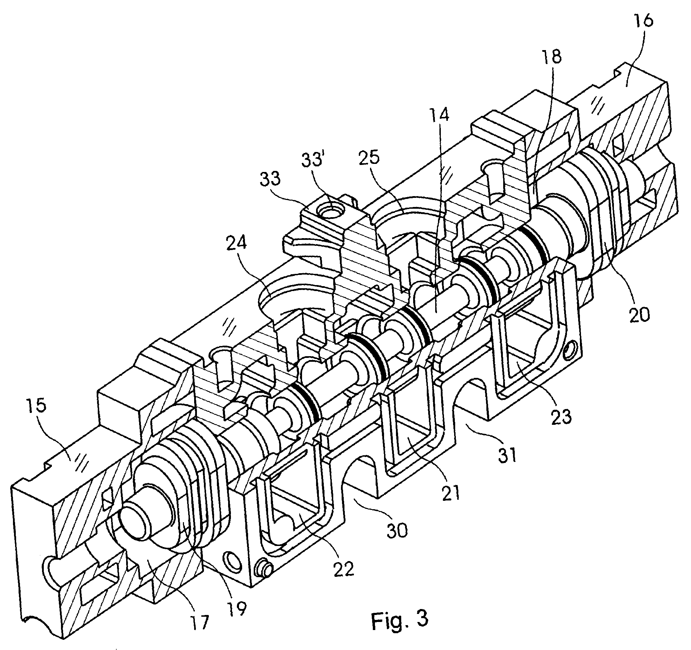

As shown in the perspective view of figure 2 and in the remaining figures 3 to 6, each valve module 10 comprises a body 13 which extends in a longitudinal direction and is provided with an air-flow path and seating for a spool 14 provided with axially spaced apart plugs for switching the compressed-air flow to and from a user; the valve module, also comprises two heads 15 and 16, each provided with a piston chamber 17 and 18 for a pneumatic cylinder, the respective piston 19, 20 of which is disengageably connected to urge on a corresponding end of the spool 14.

As shown in the various figures, both the body 13 housing the spool 14 and the end heads 15 and 16 housing the air actuated cylinders to reciprocate the spool member 14, are provided at the front and at the rear sides by flat surfaces which extend parallel to the longitudinal axis of the valve body so as to allow a sealed side by side arrangement of the valve modules 10 in the condition shown in figure 1.

Each valve body 13 in turn comprises wide transverse conduits 21, 22 and 23 which extend between the front and the rear surfaces; the central conduit 21 communicates with side ports 24 and 25 for feeding and discharging the pressurised fluid to/from a user, via side seating passages 27 for guiding the spool 14; alternatively, each transverse conduit 22 and 23 for supplying and discharging the pressurised air, communicates with a respective air inlet/outlet ports 24, 25 connected to a user, by means of a respective intermediate seating passage 28 and 29, forming again a guide and a seat for the spool 14.

The valve body 13 on the side opposite to the ports 24, 25 also comprises two cross slots 30 and 31 for tie-rods suitable for side by side securing the valve modules 10 which make up the valve assembly of figure 1; the valve body 10, at the upper side, is provided with fastening means comprising a transverse hole 32 in a projection 33 provided with threaded holes 33' for fastening screws suitable for locking connecting bars (not shown) threaded into the axially aligned holes 32 of the valve modules 10 of the valve assembly of figure 1.

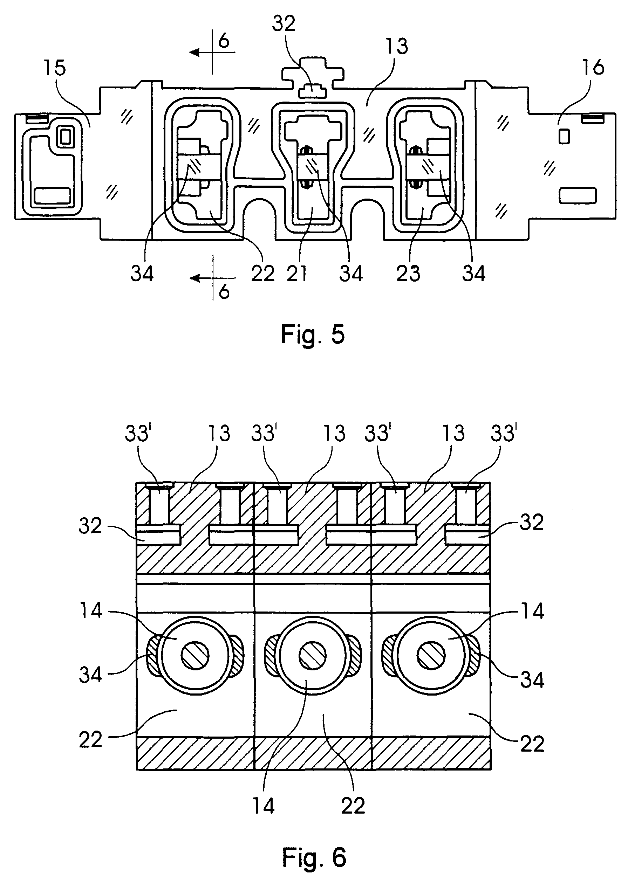

As shown in the various figures, in particular in the assembled condition of figures 1 and 6 of the accompanying drawings, the various conduits 21, 22, 23 of each valve, are aligned with corresponding transverse conduits 21, 22, 23 of adjacent valve modules, to form air-flow circulation headers, directly in the valve body, which intersect the flow path for the spool 14, thus allowing the use of conventional base-plates to be avoided and a reduction in the heightwise dimensions of each valve module in the assembled condition shown in figure 1.

The arrangement of the transverse conduits 21, 22 and 23 within the valve body, at the same level of the air-flow deviating spool 14, in addition to eliminate the use of the conventional base-plates, also allows a significant reduction in the pressure losses since each transverse duct 21, 22 and 23 communicates with the air ports 24, 25 directly via a respective passage 34 inside the valve body.

If one considers that a valve module according to the invention having, for example, a spool of 14 mm diameter allows the supply of up to 800-850 normal litres of pressurised air, while a conventional spool valve allows the supply of up to 400-500 normal litres, the advantages which can be achieved with the spool valve according to the invention will appear immediately.

According to another feature of the valve module described above, in order to reduce the widthwise dimensions without reducing the pressure thrust of the pneumatic cylinders 17 and 18 for the spool 14, each cylinder 17, 18 and the respective piston 19, 20 have an oval cross-sectional shape, the main axis of which extends parallel to the flat front and rear surfaces of the valve body.

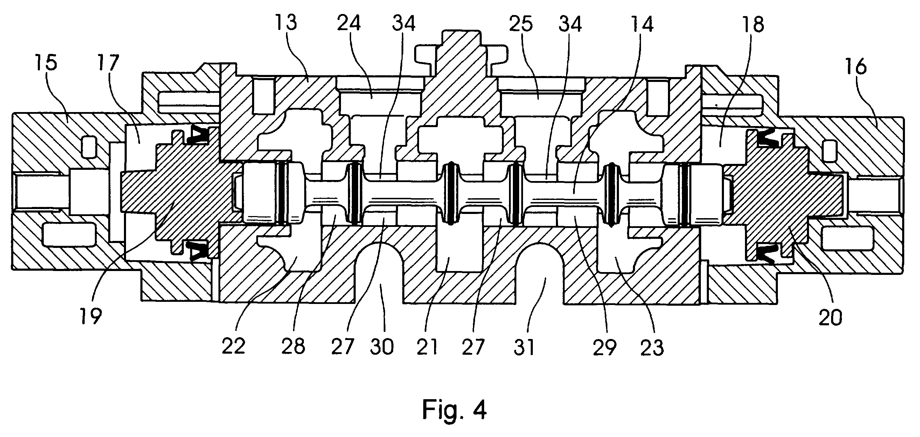

This is clearly shown in the cross-sectional views of figures 3 and 4 where it can be noted that the piston 19 and 20 of each actuating cylinder extends heightwise, thus having a small width.

As mentioned above, the transverse ducts 21, 22 and 23 define headers for circulation of the air flow supplied to or returned from the various users; since the spools 14 of the individual valve modules pass directly through these passages, being struck by the circulating air flow, it is obvious that any dirt particles entrained by the air would tend to adhere on the spool sealing surfaces in the region of the individual transverse ducts, with the risk of blocking the sliding movement of said spool or adversely affecting correct operation of the valve.

Therefore, according to a further feature of the invention, each transverse duct 21, 22 and 23 on each side of the spool 14, is provided with a longitudinal baffle 34 for protecting the spool by deviating the air flow, which baffle 34 extends parallel to the front and the rear surfaces of the valve body, on both sides of the spool 14.

The air-flow deviating baffle 34 has a width equal to or slightly smaller than the maximum diameter of the plug members of the spool 14, and has a rounded cross-sectional outline on the outer side so as to facilitate upwards and downwards deviation of the air flow within each duct; in this way, direct contact of the air flow with the spool 14 and the deposition of dirt particles are avoided, while keeping the said spool constantly clean. On the other side each baffle is provided with a rounded surface flushing with the seating surfaces 27, 28, 29 to guide the spool.

The modular valve structure according to the invention, in addition to the advantages mentioned above, also allows easy inspection and maintenance of the same valve since the various internal passages are easily accessible for routine checking and maintenance operations.

From that stated and illustrated with reference to the accompanying drawings it is therefore evident that a new air-operated modular valve structure has been provided to achieve the numerous advantages mentioned above. It is however evident that which has been stated and shown with reference to the accompanying drawings, has been provided purely by way of a non-limiting example and that other modifications and variations may be made without departing from the appended claims.

## Claims

1. A pneumatic valve module comprising:
a valve body (13) longitudinally extending in an axial direction;
an air-flow path (27, 28, 29) having axially spaced apart seating surfaces (27, 28, 29) parallely extending in the longitudinal direction of the valve body (13), said flow path (27, 28, 29) including air inlet/air outlet ports (24, 25) opening at one side surface of the valve body (13) for connection to a user;
a spool member (14) inside the flow path (27, 28, 29), said spool member (14) comprising axially spaced apart plugs, said spool member (14) being reciprocable in respect to said seating surfaces (27, 28, 29) to selectively connect the air inlet/outlet ports (24, 25) to a pressurised air feeding and air discharging ducts (21, 22, 23); characterized in that the valve body (13) comprises:
front and rear flat side surfaces parallely arranged to the longitudinal axis of the valve body (13);
said air-feeding and air-discharging ducts (21, 22, 23) transversely extending to the flow-path (27, 28, 29) between said flat side surfaces; and
air-flow deviating means (34) extending on both side of the spool member (14), between the seating surfaces inside the air-feeding and air-discharging ducts (21, 22, 23).

2. A valve module according to Claim 1, characterized by comprising a central body (13) for housing the spool member (14), said body (13) being provided with said flow path and transverse ducts (21, 22, 23), and in that a pneumatic actuator (15, 16) is removably connected to the spool member at each end of the central body (13) of the valve.

3. A valve module according to Claim 2, characterized in that each pneumatic actuator (15, 16) is provided with an oval cross-sectional shape having the main axis parallelly arranged to the flat side surfaces of the valve body (13).

4. A valve module according to Claim 1, characterized in that said air-flow deviating means comprises baffles (34) which extend between the seating surfaces (27, 28, 29) of the air-flow path for guiding the spool (14).

5. Modular valve structure according to Claim 4, characterized in that each baffle (34) comprises a rounded cross-sectional profile on the outer side to cause deviation of the air flow.
